**Europäisches Patentamt**

**European Patent Office**

**Office européen des brevets**

(19)

(11) Publication number : **0 413 574 B1**

## (12) EUROPEAN PATENT SPECIFICATION

(45) Date of publication of patent specification :
**15.12.93 Bulletin 93/50**

(51) Int. Cl.⁵ : **B60C 3/04, B60C 11/01**

(21) Application number : **90308967.0**

(22) Date of filing : **15.08.90**

(54) **High speed radial tyre.**

(30) Priority : **17.08.89 JP 212338/89**

(43) Date of publication of application :
**20.02.91 Bulletin 91/08**

(45) Publication of the grant of the patent :
**15.12.93 Bulletin 93/50**

(84) Designated Contracting States :
**DE FR GB**

(56) References cited :
**EP-A- 0 122 530**
**EP-A- 0 300 779**
**DE-A- 3 314 563**
**GB-A- 2 027 649**
**PATENT ABSTRACTS OF JAPAN, vol. 12, no.
142 (M-692)[2989], 30th April 1988;
& JP-A-62 265 003 (SUMITOMO RUBBER IND.,
LTD) 17-11-1987**

(73) Proprietor : **SUMITOMO RUBBER INDUSTRIES
LIMITED
1-1 Tsutsuicho 1-chome Chuo-ku
Kobe-shi Hyogo-ken (JP)**

(72) Inventor : **Saito, Kenji
14-80 Koujidai 4-chome, Nishi-ku
Kobe-shi, Hyogo-ken (JP)**

(74) Representative : **Stewart, Charles Geoffrey et
al
SP TYRES UK LIMITED Tyre Technical
Division
Fort Dunlop, Erdington, Birmingham B24 9QT
(GB)**

EP 0 413 574 B1

## Description

The present invention relates to a pneumatic radial tyre, in which high speed durability is improved without sacrificing ride comfort.

In accordance with the recent tendency of high performance cars towards higher running speed and higher engine power, low aspect ratio belted radial tyres are widely used.

In belted radial tyres, belt ply separation failure generally starts from the edges of the belt, since the centrifugal force accompanying high speed tyre rotation and shear strain due to repeated deformation are concentrated on the belt edges, and as a result the high speed durability of the tyre is greatly reduced.

On the other hand, heat generation during high speed running is particularly high in the shoulder regions, which accelerates belt ply separation and accordingly further reduces the high speed durability.

Previous attempts to improve high speed durability include disposal of an additional reinforcing layer outside the belt, increasing the width of the belt, and use of a folded edge structure for the belt ply.

Such conventional means however increase the rigidity of the tyre which results in the deterioration of ride comfort.

It is therefore, an object of the present invention to provide a high speed radial tyre, in which high speed durability is improved without sacrificing ride comfort by defining the profile of the tyre shoulder regions in a specific shape.

According to one aspect of the present invention, a high speed radial tyre comprises a radial carcass turned up around bead cores, and a belt comprising two cross plies disposed between the carcass and a rubber tread, wherein under a standard condition in which the tyre is mounted on a scheduled rim and inflated to a scheduled pressure and not loaded, the effective belt width BW is not less than 0.7 times and not more than 0.85 times the maximum tyre section width SW and more than the ground contacting width TW, where the effective belt width BW is the axial distance between the edges U of the part in which at least two cross plies exist, and ground contacting width TW is the axial distance between two points B on the tread surface corresponding to the edges of the ground contacting area under the loaded condition in which the tyre is mounted on the scheduled rim and inflated to the scheduled pressure and loaded to the scheduled tyre load; and under said standard condition, the shoulder region D of the tyre profile extending from said point B to a point C through a point E therebetween is formed by an arc having a single radius of curvature R not less than 0.15 times the maximum tyre section width SW where said point C is positioned at the same radial height as the centre of thickness of the belt at the said edge U, and said point E is positioned at the same axial distance from the tyre equator A as said edge U.

Therefore the amount of deformation in the shoulder region D is reduced from a ground contacting state to a non-contacting state, thereby decreasing heat generation and improving high speed durability without sacrificing ride comfort.

Further, the ratio (ta/tb) of the tread rubber thickness (ta) at the tyre equator A to the tread rubber thickness (tb) at the point B is preferably set to be not less than 1.2, whereby the ride comfort is improved without sacrificing heat-generation-controlling power.

An embodiment of the present invention will now be described in detail with reference to the drawings in which:--

Fig. 1 is a sectional view showing a right half of an embodiment of the present invention under the standard condition;

Fig.2 is a diagram schematically showing the tyre profile thereof:

Fig.3 is a graph showing a relationship between R/SW ratio and high speed durability; and

Fig.4 is a diagram schematically showing the profile of another embodiment of the present invention.

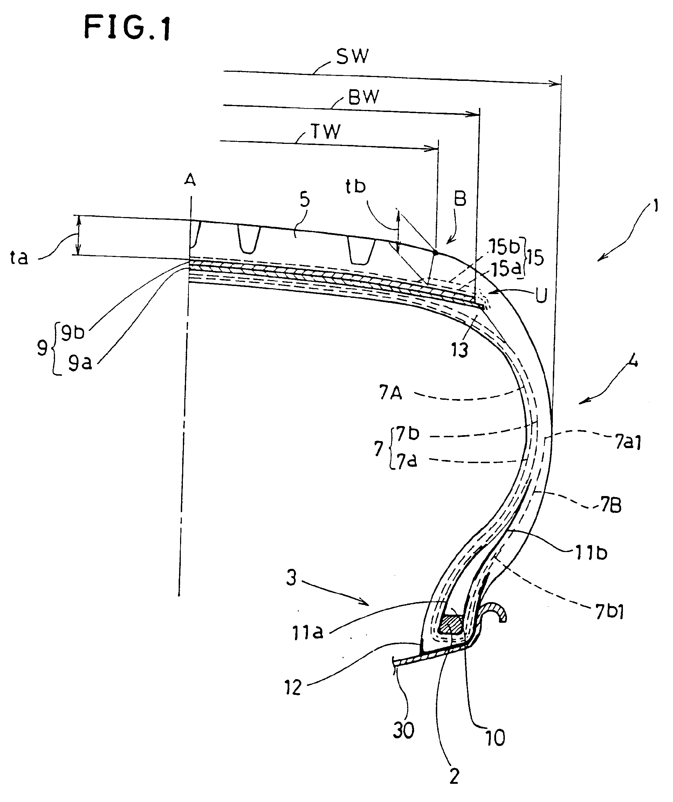

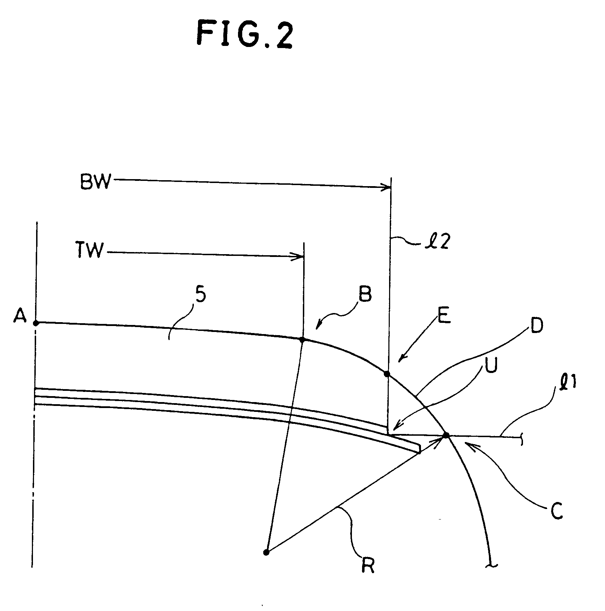

In Figs.1 and 2, a high speed radial tyre 1 is under the standard condition in which the tyre is mounted on a scheduled rim 30 and inflated to a scheduled inner pressure.

The tyre has a pair of bead portions 3, a tread portion, and sidewall portions 4 and comprises a pair of bead cores 2 disposed one in each bead portion, a carcass 7 having cord piles extending between the bead portions through the sidewall portions and the tread portion and turned up around the bead cores from the axially inside to the outside thereof to form two turned up portions 7B and one main portion 7A. A rubber tread 5 and rubber sidewalls 4 are disposed on the outside of the carcass, and a belt layer 9 is disposed between the carcass and the tread.

In this embodiment, the aspect ratio of the tyre is not more than 70%.

The carcass 7 in this example is composed of 2 plies 7a and 7b of organic fibre cords --- for example, nylon, polyester, aromatic polyamide or the like --- laid at 75 to 90 degrees to the radial direction.

In each of the carcass turned up portions 7B, the axially outer turned up portion 7a1 is extended beyond the radially outer edge of the axially inner turned up portion 7b1 so as to cover this edge, and terminated in the region of the maximum tyre section width point under the standard condition.

Each bead portion is provided with a bead apex 10 between the carcass main portion 7A and the turned up portion 7B.

The bead apex 10 is made of a hard rubber with a JIS A hardness of, for example, 65 to 90, and extends radially outwardly and taperingly from the bead core.

The bead apex increases the lateral stiffness of the tyre in cooperation with the above-mentioned high turned up carcass ply structure.

Further, the bead portion is provided with bead reinforcing layers 11a and 11b made of cords e.g. aromatic polyamide cords, and a rim chafer 12.

The layer 11a is disposed along the bead core and the bead apex so as to wrap the bead core and the radially inner part of the bead apex, and the layer 11b is disposed along the axially outside of the radially outer part of the bead apex.

The rim chafer 12 is disposed along the profile of the bead portion to prevent the bead surface form chafing.

The above-mentioned belt layer 9 comprises a plurality of breaker piles of parallel cords, in this example two breaker piles 9a and 9b arranged in opposite directions with respect to the tyre equator.

The breaker ply cord angle is set in the range of 10 to 30 degrees to the circumferential direction of the tyre so as to form a rigid triangular cord structure in co-operation with the carcass ply cords.

Both the breaker plies 9a and 9b are wider than the ground contacting width TW, and the radially inner ply 9a is wider than the outer ply 9b. Here, the tyre ground contacting width TW is the axial distance measured under the standard condition between points B corresponding to the edges of the ground contacting area of the tread in the ground contacting patch under a loaded condition in which the tyre is mounted on the scheduled rim 30 and inflated to the scheduled pressure and loaded with the scheduled load.

In other words the effective belt width BW is larger than the ground contacting width TW, whereby the belt reinforces over the entire width of the tread portion. Here, the effective belt width BW is the axial distance measured under the standard condition between the edges U of the effective part of the belt, that is, the part in which at least two cross plies (breaker plies) exist.

Accordingly, in the belt layer in this example, the effective belt width BW is thw width of the inner breaker ply 9b.

This effective belt width BW is set to be not more than 0.85 times and not less than 0.7 times, more preferably not less than 0.75 times the maximum tyre section width SW.

If the width BW is less than 0.7 times, the effect of the belt on the sidewall portions is reduced and thus in the tyre shoulder region the radially outward expansion due to high speed rotation and inflation increases, thereby partially increasing the ground contact pressure and therefore heat heat generation in the tyre shoulder. conversely if the width BW is more than 0.85 times, the tyre rigidity is increased excessively so that the ride comfort deteriorates.

For the breaker ply cords in this example, steel cords are used, but high modulus cords whose initial modulus is not less than 2500 kgf/cm$^2$, for example, organic fibre cords such as aromatic polyamide fibre, carbon fibre and the like or inorganic fibre cords such as glass fibre and other metallic wires can be used according to the required characteristics.

Further, aside from a single material, it may be possible to use two or more kinds of materials for the belt cord, and it is possible to use different cord materials for each of the belt plies.

Between the belt edge and the carcass, a cushion layer 13, made of a soft rubber, is disposed to mitigate stress concentration on the belt edge.

Further, the belt layer 9 in this embodiment includes a band 15 disposed radially outside the breaker ply layer.

The band is composed of at least one ply of organic fibre cords laid substantially parallel to the circumferential direction of the tyre.

In this example, nylon cords are used for the band ply cords, and the band is composed of a pair of narrow band plies 15a disposed one on each of the edge portions of the breaker ply layer, and a wide band ply 15b disposed on the narrow band plies and the remaining portion of the breaker ply layer so as to cover the entire width of the breaker ply layer.

Fig.2 shows the definition of the tyre profile according to the present invention, wherein the points B correspond to he edges of the ground contacting area of the tread in the ground contacting patch under the loaded condition as explained above and a point C is an intersection between the tyre profile and a straight line 11 drawn parallel to the axial direction of the tyre from the thickness centre at the above-mentioned edge U of the effective part of the belt, and a point E is an intersection between the tyre profile and a straight line 12 drawn at a right angle to the line 11 form the same thickness centre.

According to the present invention the shoulder region D of the profile between the points B and C is specifically defined as follows:

The shoulder region D is formed by an arc having a single radius R of curvature passing through the above-mentioned three points B, E and C; and

The ratio R/SW of the radius R to the maximum tyre section width SW is set to be not less than 0.15, whereby heat generation in this shoulder portion is controlled to improve high speed durability of the tyre.

Further, the tread rubber thickness measured from the tread face to the belt layer is gradually increased toward the tread centre from the tread shoulder while the thickness (tb) at the point B is maintained at a usual level, and the ratio (ta/tb) of the thickness (ta) at the tyre equator A to the thickness (tb) at the point B is not less than 1.2, and more preferably in the range of 1.4 to 1.6.

Thus the cushion effect of the tread rubber is increased to improve the ride comfort without sacrificing the heat generation controlling effect of the above-explained specified profile, that is, the ride comfort is significantly improved without sacrificing high speed durability.

The above-explained optimum profile for the tyre shoulder region was proved to be useful by the results of a large number of tests carried out by the inventor.

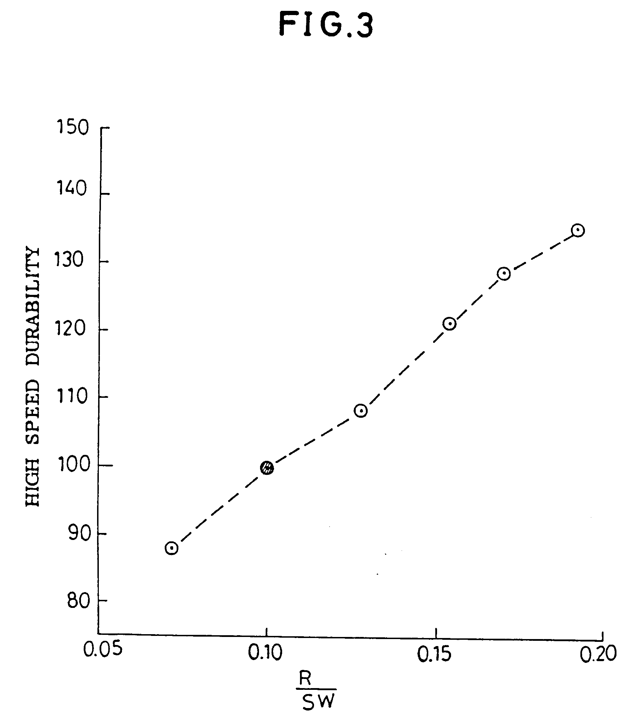

Fig.3 shows the results of a series of tests made on a tyre of size 225/50R16. This graph shows the relationship between the R/SW ratio and high speed durability.

Here, the high speed durability was evaluated by the running speed at which tread failure occurred when the tyre was running on a 1707.6mm diameter test drum, while increasing the running speed in steps of 10km/h every 20 minutes from an initial speed of 210 km/h.

Test conditions were as follows:

The test tyres had the tyre structure shown in Fig. 1,

The BW/SW ratio in each tyre was 0.84, the rim used was a regular rim of size 16X7JJ,

The air pressure was 2.6 kgf/cm$^2$,

The tyre load was 80% of the scheduled load (580kg),

The camber angle was 3 deg., and

The slip angle was 0 deg.

In Fig. 3, the evaluated results are normalised based on the assumption that the durability of the tyre having the R/SW ratio of 0.1 is 100.

The test results show that the high speed durability was significantly improved when the R/SW ratio exceeded 0.15.

Further test results are shown in Table 1, which shows high speed durability and ride comfort results on tyres of different sizes but all having a similar structure to that shown in Fig. 1.

The test method for high speed durability was the same as explained above, and the ride comfort test was sensory test for harshness when running on a test course. In Table 1, the test results are indicated by an index based on the assumption that the reference tyre 1 is 100.

It is apparent from Table 1, that the example tyres were improved in both high speed durability and ride comfort.

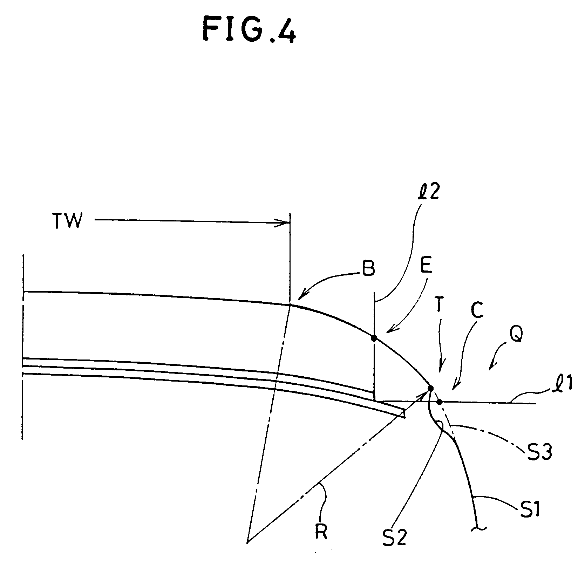

The present invention does not prevent the shoulder regions D from being provided with protuberances or depressions as long as the shoulder profile is substantially undisturbed. For example, a narrow groove or sipe, circumferentially discontinuous grooves, a circumferential thin rib and so on may be formed in this region. Fig.4 shows such a case in which a concave part S2 is formed in the portion Q around the point C, and as a result the point C exists on an imaginary line S3 drawn to be smoothly connected to the tyre outline S1.

As described above, in the present invention, the profile of the tyre shoulder regions axially outside the ground contacting area is specifically defined to decrease the amount of rubber deformation in those regions. Accordingly, heat generation is reduced and high speed durability is effectively improved.

Further, as the improvement in high speed durability is achieved by only the profile change, ride comfort does not deteriorate. Therefore, it is possible to use the above-mentioned conventional methods for improving the high speed durability, for example to use a folded edge structure for the belt ply, together with this invention.

Further, by making the tread rubber thicker in the crown portion than the shoulder portions, the ride comfort is improved, whilst maintaining the improved heat generation property. This is therefore also effective when employed together with the conventional methods mentioned above.

TABLE 1

| Tire size | 185/65R14 85H | | | 205/60R15 89H | | | 225/50ZR16 | | |
|---|---|---|---|---|---|---|---|---|---|
| | Ref.1 | Ref.2 | Ex.1 | Ref.1 | Ex.1 | Ex.2 | Ref.1 | Ex.1 | Ex.2 |
| BW/SW ratio | 0.68 | 0.74 | 0.74 | 0.76 | 0.80 | 0.80 | 0.84 | 0.88 | 0.84 |
| R/SW ratio | 0.12 | 0.12 | 0.17 | 0.10 | 0.18 | 0.18 | 0.10 | 0.17 | 0.19 |
| ta/tb ratio | 1.09 | 1.09 | 1.25 | 1.11 | 1.11 | 1.40 | 1.08 | 1.18 | 1.30 |
| High speed durability | 100 | 105 | 130 | 100 | 132 | 130 | 100 | 129 | 136 |
| Ride comfort | 100 | 95 | 105 | 100 | 100 | 110 | 100 | 90 | 110 |

## Claims

1. A high speed radial tyre comprising a radial carcass (7) turned up around bead cores (2), and a belt (9) comprising two cross plies (9a, 9b) disposed between the carcass (7) and a rubber tread (5), wherein under a standard condition in which the tyre is mounted on a scheduled rim and inflated to a scheduled pressure and not loaded,the effective belt width BW is not less than 0.7 times and not more than 0.85 times the maximum tyre section width SW and more than the ground contacting width TW, where the effective belt width BW is the axial distance between the edges U of the part in which at least two cross piles (9A, 9B) exist, and ground contacting width TW is the axial distance between two points B on the tread surface corresponding to the edges of the ground contacting area under the loaded condition in which the tyre is mounted on the scheduled rim and inflated to the scheduled pressure and loaded to the scheduled tyre load; and under said standard condition, the shoulder region D of the tyre profile extending from said point B to a point C through a point E therebetween is formed by an arc having a single radius of curvature R not less than 0.15 times the maximum tyre section width SW where said point C is positioned at the same radial height as the centre of thickness of the belt at the said edge U, and said point E is positioned at the same axial distance from the tyre equator A as said edge U.

2. A tyre according to claim 1 characterised in that the ratio (ta/tb) of the tread rubber thickness (ta) at the tyre equator A to the tread rubber thickness (tb) at the point B is not less than 1.2.

## Patentansprüche

1. Ein Hochgeschwindigkeitsradialreifen mit einer radialen Karkasse (7), die um Wulstkerne (2) nach oben gedreht ist, und einem Gürtel (9), der zwei Kreuzlagen (9a, 9b) umfaßt, die zwischen der Karkasse (7) und einer Gummilauffläche (5) angeordnet sind, worin unter einer Standardbedingung, in welcher der Reifen auf einer vorgesehenen Felge aufgezogen und zu einem vorgesehenen Druck aufgepumpt und nicht belastet ist, die effektive Gürtelbreite BW nicht weniger als 0,7 mal und nicht mehr als 0,85 mal der maximalen Reifenquerschnittsbreite SW und mehr als die bodenberührende Breite TW ist, wobei die effektive Gürtelbreite BW der axiale Abstand zwischen den Rändern U des Teils ist, in welchem zumindest zwei Kreuzlagen (9A, 9B) existieren, und die bodenberührende Breite TW der axiale Abstand zwischen zwei Punkten B auf der Laufflächenoberfläche ist, die den Rändern der bodenberührenden Fläche unter der belasteten Bedingung entspricht, in welchem der Reifen auf der vorgesehenen Felge aufgezogen und zu dem vorgesehenen Druck aufgepumpt und zu der vorgesehenen Reifenlast belastet ist; und wobei unter der Standardbedingung der Schulterbereich D des Reifenprofils, das sich aus dem Punkt B zu einem Punkt C durch einen Punkt E dazwischen erstreckt, durch einen Bogen mit einem einzigen Krümmungsradius R nicht weniger als 0,15 mal der maximalen Reifenquerschnittsbreite SW gebildet ist, wobei der Punkt C bei der gleichen radialen Höhe wie die Mitte der Dicke des Gürtels bei dem Rand U positioniert ist, und der Punkt E bei dem gleichen axialen Abstand von dem Reifenäquator A zu dem Rand U angeordnet ist.

2. Ein Reifen nach Anspruch 1, dadurch gekennzeichnet, daß das Verhältnis (ta/tb) der Lauffflächengummidicke (ta) bei dem Reifenäquator A zur Lauffflächengummidicke (tb) an dem Punkt B nicht weniger als 1,2 beträgt.

**Revendications**

1. Pneumatique à carcasse radiale pour grandes vitesses, comprenant une carcasse radiale (7) repliée autour de tringles (2), et une ceinture (9) comportant deux nappes croisées (9a, 9b) disposées entre la carcasse (7) et une bande de roulement (5) formée de caoutchouc, dans lequel, dans les conditions normales dans lesquelles le pneumatique est monté sur une jante nominale et gonflé à une pression nominale et n'est pas sous charge, la largeur efficace BW de la ceinture n'est pas inférieure à 0,7 fois ni supérieure à 0,85 fois la largeur maximale SW en coupe du pneumatique et n'est pas supérieure à la largeur de contact avec le sol TW, la largeur efficace BW de la ceinture étant la distance axiale comprise entre les bords U de la partie dans laquelle deux nappes croisées au moins (9A, 9B) sont présentes, la largeur TW de contact avec le sol étant la distance axiale comprise entre deux points B de la surface de la bande de roulement correspondant aux bords de la surface de contact avec le sol à l'état sous charge dans lequel le pneumatique est monté sur la jante nominale et gonflé à la pression nominale et est chargé à la charge nominale du pneumatique et, à l'état normal, la région D d'épaulement du profil du pneumatique placée entre le point B et un point C et passant par un point intermédiaire E est formée par un arc ayant un seul rayon de courbure R qui n'est pas inférieur à 0,15 fois la largeur maximale SW de la section du pneumatique, le point C étant à la même hauteur radiale que le centre de l'épaisseur de la ceinture audit bord U, le point E étant à la même distance axiale de l'équateur A que le bord U.

2. Pneumatique selon la revendication 1, caractérisé en ce que le rapport (ta/tb) de l'épaisseur (ta) du caoutchouc de la bande de roulement à l'équateur A du pneumatique et de l'épaisseur (tb) du caoutchouc de la bande de roulement au point B n'est pas inférieur à 1,2.

# FIG.1

# FIG.2

# FIG.3

# FIG.4